# EUROPEAN PATENT APPLICATION

(11) **EP 1 938 896 A1**
(43) Date of publication of application: **02.07.2008**
(21) Application number: 06810524.6
(22) Date of filing: 25.09.2006
(51) Int. Cl.: B01J 23/89, H01M 4/86, H01M 4/88, H01M 4/90, H01M 4/92

(54) **PARTICULATE CARBON CARRYING FINE PARTICLE THEREON, PROCESS FOR PRODUCTION THEREOF, AND ELECTRODES FOR FUEL CELLS**

(30) Priority: 26.09.2005 JP 2005277021
(71) Applicant: Hitachi Maxell, Ltd., Ibaraki-shi Osaka 567-8567 (JP); TOYOTA JIDOSHA KABUSHIKI KAISHA, Toyota-shi, Aichi-ken, 471-8571 (JP)
(72) Inventor: SAWAKI, Yuko, Ibaraki-shi, Osaka 567-8567 (JP); KISHIMOTO, Mikio, Ibaraki-shi, Osaka 567-8567 (JP); NAKANISHI, Haruyuki, Toyota-shi, Aichi 471-8571 (JP); IMANISHI, Masahiro, Toyota-shi, Aichi 471-8571 (JP)
(74) Representative: HOFFMANN EITLE
(86) International application number: PCT/JP2006/318965
(87) International publication number: WO 2007/034946

(57) **Abstract**

There are provided carbon particles supporting thereon fine particles of a perovskite type composite oxide, which can be used as a substitute for the existing platinum-supporting carbon particles or platinum metal particles commonly used in electrocatalysts for fuel cells, and which are significantly reduced in the amount of platinum to be used in comparison with the existing platinum-supporting carbon particles, and a process for manufacturing the same carbon particles.

The fine particles of a perovskite type composite metal oxide which contains a noble metal element in its crystal lattice and has an average crystallite size of from 1 to 20 nm are supported on carbon particles. To manufacture such fine particle-supporting carbon particles, a solution containing complex ions of a metal which constitutes the fine perovskite type composite oxide particle is firstly prepared; then, carbon particles are dispersed in the resulting solution to adsorb the complex ions of the metal onto the carbon particles; and the resulting dispersion is subjected to a heat treatment.

## Description

### TECHNICAL FIELED

The present application was filed claiming the priority under the Paris Convention based on the Japanese Patent Application No. 2005-277021 titled "FINE PARTICLE-SUPPORTING CARBON PARTICLES AND MANUFACTURING THEREOF" filed on September 26, 2005, the entire content of which is herein incorporated by reference.
The present invention relates to fine particle-supporting carbon particles and the manufacturing of the same. Particularly, the invention pertains to fine particle-supporting carbon particles which support thereon fine particles of a perovskite type composite metal oxide, and the manufacturing of the same, and to a fuel cell electrode using the same carbon particles.

### BACKGROUND OF THE INVENTION

Metal particle-, alloy particle- or metal oxide particle-supporting particles hitherto have been widely used as a variety of catalysts for deodorization, antibacteria, cleansing of automobile exhaust gases, fuel cells and reduction of NOx. As the support particles, metal oxides such as titanium oxide, zirconium oxide, iron oxide, nickel oxide, cobalt oxide, etc. and carbon are mainly used. Particularly, catalysts which comprise carbon particles having electric conductivity as supports are useful as the electrocatalysts of fuel cells.

In the meantime, specific perovskite type composite metal oxides are known to have NOx-decomposing actions. NOx contact catalysts comprising the specific perovskite type composite metal oxides supported on supports are proposed in Patent Publication 1. Patent Publication 2 discloses that catalysts obtained by supporting noble metals such as Pt, Pd, Rh, etc. on the pervskite composite metal oxides as supports can show superior catalytic actions even at high temperatures exceeding 500°C. Further, Patent Publication 3 discloses that peroviskite composite metal oxides (represented by the formula: ABO₃) which are partially substituted at their sites B by noble metals such as Pt, Pd and Rh can show superior catalytic actions also at low temperatures as well as high temperatures and are further enhanced in sulfur-tolerance. Patent Publication 4 discloses catalysts for cleansing exhaust gases, and these catalysts are prepared by supporting platinum-containing structural substances on alumina supports. In this publication, a catalyst comprising a platinum structural substance of the formula: SrPtO₃ supported on an aluminum support is disclosed in Example 6.

In the meantime, some perovskite type composite metal oxides containing transition metal elements such as iron, cobalt and nickel have been practically used as catalysts for the air electrodes of solid oxide type fuel cells (or SOFC). The solid oxide type fuel cells are used under service environments as high as about 800 to about 1,000°C. It is known that, under such high temperature conditions, the transition metal elements themselves contained in these perovskite type composite metal oxides function as catalysts having oxygen-decomposing actions.

The following methods <1> and <2> are generally employed to support the perovskite type composite metal oxide on the surfaces of supports.
<Method 1> An aqueous solution containing a metal salt is applied to supports and is dried; and the coated supports are then subjected to a heat treatment at a high temperature to deposit the metal salt on the surfaces of the supports.
<Method 2> Fine particles of a perovskite type composite metal oxide are prepared in advance and are dispersed to obtain a dispersion thereof, and the fine particles are fixed on the surfaces of supports from the dispersion.

Patent Publication 5 discloses the following method: before supporting the fine particles of a perovskite type composite metal oxide on supports, the fine particles of the perovskite type composite metal oxide which contains Pd in the crystal lattice are prepared in advance; a slurry of such fine particles is applied to the supports; and the coated supports are subjected to a heat treatment. In this case, the prepared perovskite type composite metal oxide particles are of submicron size, and the supports have areas sufficient to receive the applied slurry.

Patent Publication 6 discloses the method of supporting metal oxide particles on carbon materials by way of a plasma treatment using microwave. Specifically, particles of titanium oxide, nickel oxide or cobalt oxide supported on carbons are exemplified. It is described in this patent publication that this method can be applied to perovskite type composite metal oxides. According to this method, it is possible to support, on a carbon support, a metal oxide whose oxidation temperature is high enough to burn carbon as the support to make it difficult to support such a metal oxide on the carbon. However, a special apparatus is needed to carry out a plasma treatment.

Patent Publication 1: JP-A-5-261289/1993
Patent Publication 2: JP-A-2001-269578
Patent Publication 3: JP-A-2004-321986
Patent Publication 4: JP-A-2000-189799
Patent Publication 5: JP-A-2004-41866
Patent Publication 6: JP-A-11-28357/1999

### DISCLOSURE OF THE INVENTION

### PROBLEMS TO BE SOLVED BY THE INVENTION

As described above, the perovskite type composite metal oxides themselves are known substances and have been utilized as catalysts for solid oxide type fuel cells. The perovskite type composite metal oxides of which the constituent elements are partially substituted by noble metals, particularly palladium, are known materials utilized as catalysts for cleansing exhaust gases.

However, there is not proposed any catalyst that comprises carbon particles, such as carbon black, having electric conductivity and easily available at lower costs, and perovskite type composite metal oxide particles supported thereon. The existing perovskite type composite metal oxide particles are applied to catalysts for cleansing exhaust gases, and therefore, the perovskite type composite metal oxide particles themselves are used as supports. Even when the perovskite type composite metal oxide particles are supported on supports, alumina or cerium type heat resistant oxides are used as the supports. This is because these supports are not needed to have electric conductivity like carbon black or the like, when used as the catalysts for cleansing exhaust gases from the engines of automobiles, etc., and because carbon black is burnt and thus is not usable as supports, since catalysts for solid oxide type fuel cells, as well as the catalysts for cleansing exhaust gases, are used under high temperature atmospheres so high as about 1,000°C.

There has not been proposed such an idea that perovskite type composite metal oxide particles of which the constituent elements are partially substituted by noble metals are utilized in the electrocatalysts of solid polymer type fuel cells (or PEFC). This is because polymeric materials are used as electrolytes in case of the solid polymer type fuel cells, so that it is needed to actuate the fuel cells at low temperatures up to 300°C or lower. Under such low temperature atmospheres, the perovskite type composite metal oxides, useful for the solid oxide type fuel cells (or SOFC), are hard to exhibit their catalytic actions, and the noble metal elements are hard to exhibit their superior properties as the electrocatalysts at such low temperatures, if not present in the states of metals, so that the noble metals which are substituted and are present in the forms of ions are not effective as the catalysts.

As described above, the required properties of the catalysts comprising the perovskite type oxide particles or the perovskite type composite oxide particles (hereinafter optionally referred as "perovskite type oxide particles") differ depending on the applications thereof. This point is particularly significant as the problem to be solved. Therefore, this point will be described in detail as below.

When the perovskite type oxide particles are used as the catalyst for cleansing exhaust gases, such particles are exposed to an atmosphere of specific conditions under a service environment to thereby exhibit functions as the catalyst. Only under such a situation, the substituted palladium element in the form of a metal is deposited to be utilized. These perovskite type oxide particles are generally of micron size, and are, in many cases, as small as at least several hundreds nanometers in size. To exhibit the function as the catalyst for cleansing exhaust gases, the cycle of depositing the substituted palladium in the state of metal in the perovskite type oxide and again forming it into a solid solution is repeated, by taking advantage of the oxidation and reduction of the peroviskite oxide depending on a change in the atmosphere at a temperature as high as about 800°C. A catalyst for cleansing exhaust gases, which comprises the conventional perovskite type oxide particles, allows a noble metal element to deposit in the form of fine metal particles only when used, by making use of the above-described mechanism. Thus, the problem of the degradation of the catalytic activity, caused by the aggregation and sticking of the noble metal elements when the noble metal elements are always deposited in the form of the metal, can be solved.

If the above-described mechanism in which the substituted noble metal element in the perovskite type oxide particle is deposited and formed into a solid solution can be applied to an electrocatalyst, it becomes possible to prevent the serious problem of the electrocatalysts of the existing solid polymer fuel cells, in other words, the degradation of the properties of the catalyst due to the aggregation and sticking of platinum particles. However, to cause the oxidation and reduction reactions by controlling the atmosphere at a high temperature of about 800° is impossible when the perovskite type oxide particles are used as the electrocatalyst of a solid polymer type fuel cell. The change in temperature toward a high temperature region is up to about 300°C at the highest, and the control of the atmosphere is also difficult. It is also confirmed that a temperature as low as about 300°C is impossible to cause the deposition of noble metal elements even under a vigorous reduction atmosphere of 100% of a hydrogen gas. Therefore, it is impossible to make use of the exact reproduction of the phenomenon caused by the use of the catalyst for cleansing exhaust gases, for an electrocatalyst. This is also one of the reasons why the perovskite type oxide particles substituted by a noble metal can not be used as the electrocatalysts of fuel cells and the like.

Under such a situation, the present inventors have contemplated whether or not it is possible to forcedly cause the migration of electrons by application of a voltage so as to cause similar reactions, in place of the measure of taking or giving electrons from or to noble metal elements through the oxidation and reduction reactions under a high temperature atmosphere. However, this case also confronts a serious problem. An energy generated by a voltage of about 1 V (that is, electrolysis of water occurs by application of a voltage of above 1.2 V, and thus, a voltage possible to be applied to the electrode of a fuel cell is about 1 V at the highest) is lower a number of double figures than an energy generated by a temperature as high as 800°C. Thus, the voltage of this level is hard to cause electrons to be taken from or given to noble metal elements, namely, to cause the oxidation and reduction reactions.

The present inventors also have contemplated that the unstable bonds on the surface of a perovskite type oxide are utilized in order to cause the reactions by too low an energy as described above to thereby exhibit the properties as an electrocatalyst. However, the perovskite type oxide particles of the size used as the above-described catalyst for cleansing exhaust gases are small in the ratio of the activated surface area, and most of them behave as a bulk. Therefore, it is impossible to cause such perovskite type oxide particles to exhibit a catalytic function under application of a voltage of about 1 V.

Because of the foregoing main reasons, the perovskite type oxide particles hitherto have not been used as or considered to be used as the electrocatalysts of solid polymer type fuel cells or the like. In the meantime, lots of syntheses of perovskite type oxide particles have long been conducted. However, in any of such cases, fine perovskite type oxide particles suitable for use as the electrocatalysts of fuel cells or the like have not yet been realized. The fact is that the perovskite type oxide particles for other applications such as the catalysts for cleansing exhaust gases have been synthesized so far.

In the prior art, it has been difficult to obtain perovskite type oxide particles with far smaller particle sizes suitable for use as the electrocatalysts of fuel cells or the like, which the present inventors have been contemplated. That is, any of the conventional perovskite type oxide particles singly obtained is of submicron size which is from about 30 to about 50 nm at the smallest, except for the examples of a crystal integrated with a medium, which is grown in the void of porous silica.

Also, <the method 1> and <the method 2> described above as the method employed to support the perovskite type composite oxide particles on the surfaces of supports suffer from the following problems. That is, <the method 1> is employed to support the perovskite type oxide particles on flat supports having certain areas, and thus is not suitable for particle-shaped supports. In case of <the method 2>, it is needed to prepare the fine particles of a perovskite type composite metal oxide in advance. However, it is difficult to synthesize fine perovskite type composite metal oxide particles of the size so small as several tens nm or less, and additionally, even if synthesized, such particles aggregate before being supported on supports, so that it is very difficult to support such fine particles on the supports while keeping a highly dispersed state thereof. These methods, therefore, are hard to obtain carbon particles which support thereon fine perovskite type composite oxide particles, suitable for use as the electrocatalysts of fuel cells.

The present invention has been developed to solve the foregoing problems. A main object of the present invention is therefore to provide carbon particles which support thereon fine particles of perovskite type composite oxide, usable as catalysts which can be used under a relatively low temperature atmosphere (300°C or lower) as in case of the electrocatalysts of solid polymer type fuel cells (PEFC), and which are also required to have electric conductivity, while the fine particle-supporting carbon particles of the present invention are not intended to be used as catalysts which are assumed to be used under a high temperature atmosphere (from 800 to 1,000°C) as in case of the electrocatalysts of solid oxide fuel cells (SOFC) or the catalysts for cleansing exhaust gases from automobile engines. Another main object of the present invention is to provide a process for manufacturing the same particles. In other words, the present invention is intended to provide carbon particles supporting thereon fine perovskite type composite oxide particles, which can be used as a substitute for the existing platinum-supporting carbon particles or platinum metal particles generally used in the electrocatalysts of solid polymer type fuel cells, and which can be markedly reduced in the amount of platinum as compared with such existing platinum-supporting carbon particles or the like, and to provide a process for manufacturing the same particles.

### MEANS FOR SOLVING THE PROBLEMS

As a result of the present inventors' intensive studies to solve the above-described problems, it is found that perovskite type composite oxide particle-supporting carbon particles can exhibit properties as the electrocatalyst of a fuel cell or the like at a low temperature of not higher than 300°C by the following measures: that is, the particles of a perovskite type composite oxide containing a noble metal element such as platinum or the like in the crystal lattice are supported on carbon particles, and other than this, the particle diameter of the perovskite type composite oxide particles to be supported is reduced to thereby increase the ratio of the activated surface areas of the particles, so that the particles reduced to a size of such a fine particle are not allowed to be present as a bulk of aggregate of the particles. The carbon particles which support thereon such fine perovskite type composite oxide particles can exhibit the properties as the electrocatalyst of a fuel cell at a low temperature of not higher than 300°C.

Based on this finding, there are provided fine particle-supporting carbon particles wherein particles of a perovskite type composite oxide which contains a noble metal element in the crystal lattice and has an average crystallite size of from 1 to 20 nm are supported on the carbon particles.

It is not certainly known why such fine particle-supporting carbon particle can exhibit properties as an electrocatalyst by reducing the perovskite type composite oxide particles to be supported on the carbon particle, to the above-described size (hereinafter also referred to as single nano size). However, it is supposed that the properties of the surface of the particle, previously estimated, are intensely exhibited to increase unstable bonds. Other than this, it is also considered that this phenomenon comes from a result of exhibition of various quantum effects due to the reduction of the size of the perovskite type composite oxide particles to a single nano size.

By reducing, to single nano size, noble metal-containing perovskite type composite oxide particles which hitherto have been believed to be unable to be utilized as electrocatalysts as described above, such reduced perovskite type composite oxide particles, when used being supported on carbon particles, are found to exhibit properties as an electrocatalyst. This catalyst having self-regeneration mechanism is considered not to degrade in properties in the early stage due to aggregation and sticking of platinum particles, differently from the conventional platinum particle catalysts. In the state of the art, platinum in an amount as large as 50% by weight based on the weight of carbon particles as a support is generally needed for an electrocatalyst, in order to sufficiently maintain the properties after the degradation of the catalyst. In contrast to such a present state, the fine particle-supporting carbon particles of the present invention do not show such degradation of platinum particles, and thus can be used as an electrocatalyst, using a smaller amount of a noble metal (mainly platinum).

The present inventors also have intensively studied to manufacture fine particle-supporting carbon particles which have specific properties usable as the above-described electrocatalyst. As a result, they have found out a technique to reduce noble metal-containing perovskite type composite oxide particles to a nanometer size, and have succeeded in supporting such reduced perovskite type composite oxide particles, kept in a monodispersed state, on carbon particles having electric conductivity.

That is, a process for manufacturing fine particle-supporting carbon particles, according to the present invention, comprises the steps of, firstly, preparing a solution which contains a metal constituting a fine particle of a perovikite type composite oxide, and complex ions of a noble metal; dispersing carbon particles in the resulting solution to adsorb the complex ions of the metal onto the carbon particles; and subjecting such carbon particles to a heat treatment. By this process, the fine particles of the perovskite type composite oxide kept in a state of a monodispersion of primary particles can be supported on the carbon particles. The term "monodispersion" used in the present invention means a state of a dispersion of primary particles.

### EFFECT OF THE INVENTION

According to the present invention, there can be provided noble metal-containing perovskite type oxide particles usable in the electrocatalysts of solid polymer type fuel cells for use in automobiles, etc., in other words, fine particle-supporting carbon particles usable as substitutes for the existing platinum particle-supporting carbon particles. The use of the platinum particle-supporting carbon particles is disadvantageous in view of cost and also leads to the exhaustion of platinum. To decrease of the amount of platinum to be used is one of urgent problems to be solved. Under such a situation, the present invention is useful as an important measure to solve such a problem.

According to the present invention, there also can be provided fine particle-supporting carbon particles which support thereon fine particles of a perovskite type composite metal oxide with an average crystallite size of from 1 to 20 nm (from 1 nm inclusive to 20 nm inclusive) which hitherto have been impossible to provide by any of the existing manufacturing processes.

### BRIEF DESCRIPTION OF THE DRAWINGS

Fig. 1 shows a diagrammatic cross section of a membrane-electrode assembly (MEA) for a solid electrolyte type fuel cell, illustrating a common structure thereof.
Fig. 2 shows a graph of the X-ray powder diffraction spectrum of a carbon particle supporting thereon particles of La(Fe_{0.95}Pt_{0.05})O₃ with a size of 10 nm prepared in Example 1.

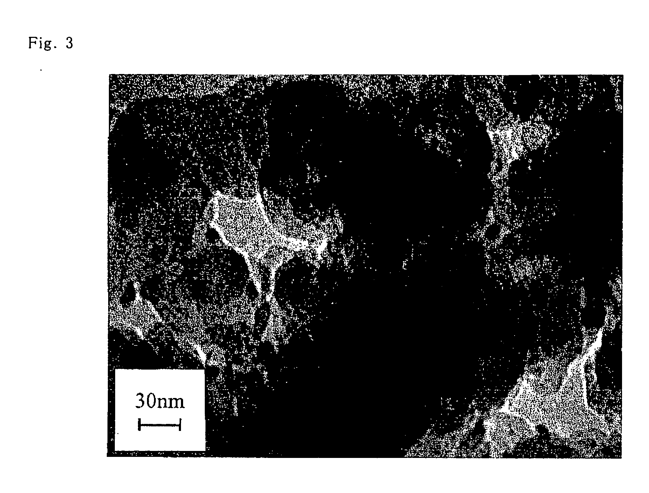

Fig. 3 shows a TEM photograph (magnification: 3,000,000) of the carbon particle supporting thereon the particles of La(Fe_{0.95}Pt_{0.05})O₃ with a size of 10 nm prepared in Example 1.

### DESCRIPTION OF REFERENCE NUMERALS

1 = a solid polymer electrolytic membrane
2 = an air electrode
3 = a fuel electrode
4 = a gas diffusion layer for the air electrode
5 = a gas diffusion layer for the fuel electrode
10 = a membrane electrode assembly (MEA)

### BEST MODES FOR CARRYING OUT THE INVENTION

According the process of the present invention, fine particle-supporting carbon particles are manufactured by the steps of previously preparing a solution containing complex ions of a metal (i.e., a metal constituting an intended perovskite type composite oxide particle); dispersing carbon particles in the resulting solution to adsorb the complex ions of the metal onto the surfaces of the carbon particles; drying the dispersion to deposit the precursor of fine metal oxide particles on the surfaces of the carbon particles; and subjecting the dried such carbon particles to a heat treatment. By adsorbing the complex ions of the metal onto the surfaces of the carbon particles as described above, the fine particles, with an average crystallite size of from 1 to 20 nm, of the perovskite type composite oxide which contains the noble metal element in the crystal lattice, kept in a monodispersion of the primary particles, can be supported on the carbon supports.

The fine particle-supporting carbon particles thus obtained are used as a functional material usable in electrocatalysts of fuel cells or the like. In the present invention, noble metal elements useful as the electrocatalysts of fuel cells, which are in states of ions but not metals, are contained in the crystal lattices of perovskitye type composite oxides. Consequently, in use, the noble metal particles are not stuck to one another or are not grown. Therefore, the fine particle-supporting carbon particles of the present invention are expected to be used as electrocatalysts with superior durability.

Hereinafter, the process for manufacturing the fine particle-supporting carbon particles of the present invention will be described in more detail.

Firstly, a solution containing the complex ions of a metal which constitutes a perovskite type composite oxide of the formula: ABO₃ is prepared. As the metal represented by A, there are exemplified divalent or trivalent metal elements such as La, Sr, Ce, Ca, Y, Er, Pr, Nd, Sm, Eu, Mg, Ba and the like. While at least one element is selected from the above metal elements, such a metal element is not particularly limited to the above metal elements, in so far as it can constitute a perovskite structure. Next, the metal represented by B comprises at least one transition metal element selected from Fe, Co, Mn, Cu, Ti, Cr, Ni, Nb, Pb, Bi, Sb, Mo and the like, and at least one noble metal element, or comprises at least one noble metal element described above. As the noble metal element contained in the site B, there are given Pt, Ru, Pd, Au and the like, from which at least one element is selected. However, it is preferable to at least contain Pt when the perovskite type composite oxide is used in the electrocatalyst of a fuel cell. The total content of the noble metal element(s) in the site B is preferably from 4 to 100 at. % of the elements in the site B. When the total content of the noble metal element(s) in the site B is smaller than the lower limit, the weight of the noble metal(s) to the carbon particle as the support becomes too small, which makes it difficult to exhibit the catalytic action.

As the above metal complex, there are given inorganic complexes such as the complexes of chlorides and the complexes of amine nitrate, or complexes containing organic substances such as the complexes of citric acid, complexes of malic acid and the complexes of picolinic acid, from which a suitable one to be present as ions thereof in a solution is selected in accordance with a metal element to be used. In this case, it is not preferable to contain, in the solution, a metal other than the intended metal: for example, when a complex of a metal salt such as rubinium salt or cesium salt selected from the existing complex compounds is simply dissolved, undesirably, a metal element other than the intended metal is contained in the solution. The complexes of citric acid and malic acid are particularly preferred among the above complexes, since the adsorption efficiency of these complexes onto the surfaces of the carbon particles is good, and since the metal elements are crosslinked to each other to make it easy to form a perovskite structure.

Next, carbon particles with an average particle diameter of from 20 to 70 nm are dispersed in the solution containing the ions of the above metal complex. The carbon particles are not particularly limited. However, for example, carbon particles of acetylene black such as DENKA BLACK available from DENKA, furnace black such as VULCAN® from CABOT, or ketjenblack are preferably used. The use of carbon particles with an average particle diameter of smaller than 20 nm arises no problem in the properties of a final product as a catalyst. However, the aggregation of such carbon particles more certainly occurs as the particle diameter becomes smaller, which undesirably makes it hard to uniformly disperse such carbon particles in the course of the synthesis. On the other hand, when the average particle diameter of the carbon particles is larger than 70 nm, the properties of the final product as the catalyst are not perfectly lost, however, the specific surface areas thereof become smaller, for which the catalytic action undesirably becomes lower.

The average particle diameter of the carbon particles is determined by averaging the particle diameters of 100 carbon particles on a transmission electron microscopic (TEM) photograph. In this regard, the carbon particles are dispersed in the solution so that the content of the metal elements in the solution can be adjusted so as to control the amount of the perovskite type composite oxide in the final product, i.e., the fine particle-supporting carbon particles to 5 to 50% by weight. No problem arises even when the amount of the fine particles supported on the carbon particles is smaller than 5% by weight. However, when such fine particle-supporting particles are used, for example, the amount of platinum in a catalyst as a whole becomes smaller, which is likely to make it hard to exhibit the function of platinum. On the other hand, no problem arises even when the amount of the fine particles supported on the carbon particles exceeds 50% by weight. However, an increased amount of the fine particles may not be deposited on the surfaces of the carbon particles as a single layer, with the result that the superposition of the fine particles of the perovskite type oxide on one another or the aggregation thereof is likely to occur.

The complex ions of the metal(s) are adsorbed onto the surfaces of the carbon particles as described above, and such carbon particles are then dried so that the fine particles of the precursor of the perovskite type composite oxide are deposited on the surfaces of the carbon particles. The metal complex particles adsorbed onto the surface of the carbon particles are in the state of ions and are dispersed in a molecular level in the solution. Therefore, the metal complex particles kept in this dispersed state can be adsorbed onto the adsorption points of the carbon particles. When such carbon particles are dried, only the complexes the nearest to each other are crystallized to make it possible to deposit the particles of the precursor of the perovskite type composite oxide, with a crystallite size of 20 nm or less. The atmosphere for drying the carbon particles is not limited, and it may be of an air or in vacuum. However, drying in an air is preferable since it is the simplest and costs lower.

The fine particle-supporting carbon particles thus obtained are further subjected to a heat treatment. Preferably, the heat treatment is carried out under an atmosphere of an inert gas such as nitrogen, argon or the like. When the heat treatment is carried out under an atmosphere containing oxygen, the carbon particles as the supports are likely to be burnt. When the heat treatment is carried out under a reducing atmosphere, the precursor particles adsorbed onto the carbon particles are not likely to form the perovskite type composite oxide. The temperature for the heat treatment is preferably from 500 to 1,000°C, more preferably from 550 to 700°C. The most preferable temperature for the heat treatment changes depending on the crystallization temperature of the perovskite type composite oxide, and therefore changes depending on the selection of the constituent elements A and B (including noble metal elements). For example, when the constituent element A = La and the constituent elements B = Fe and Pt, a perovskite structure can not be formed at not higher than 500°C, and such constituent elements are sintered at a high temperature of not lower than 1,000°C, which makes it difficult to keep the perovskite type composite oxide particles of nanometer size. In this sense, it is most preferably to carry out the heat treatment at the lowest temperature for crystallizing the perovzkite composite oxide.

By the above-described process, there can be obtained the fine particle-supporting carbon particles with an average particle diameter of from 20 to 80 nm which support thereon the fine particles of the perovskite type composite oxide containing the noble metal element in the crystal lattice and with an average crystallite size of from 1 to 20 nm. The average particles size of the fine particle-supporting carbon particles is determined by averaging the particle diameters of 100 particles observed on the TEM photograph.

It is considered that the above-described perovskite type composite oxide particles with an average crystallite size of smaller than 1 nm also can exhibit the function as a catalyst. However, from the viewpoint of the features of the crystals with the perovskite structures, too small a number of lattice points make it hard to cause stable bonds, which leads to difficulty to keep the perovskite structure and simultaneously leads to difficulty to stably manufacture the perovskite type composite oxide particles for these reasons. On the other hand, the above-described perovskite type composite oxide particles with an average crystallite size of not smaller than 20 nm do not lose the function as a catalyst. However, such particles can not have a sufficient specific surface area and thus tend to degrade in the function as the catalyst. For the above-described reasons, the average crystallite size of the fine particles of the perovskite type composite oxide containing the noble metal element in the crystal lattice is preferably from 1 to 20 nm.

It is rare that a fine particle with a crystallite size of not larger than 20 nm singly has a polycrystalline structure, and a fine particle is mostly a monocrystalline particle. Accordingly, the average particle diameter of the fine particles supported on the carbon particles can be determined from the average crystallite size found by the X-ray powder diffraction spectrum other than from the TEM photograph. Particularly in case of fine particles with a particle diameter of not larger than several nm, an error in measurement of particle diameters by way of visual observation of a TEM photograph is large, and therefore, it is preferable to determine the particle diameter from an average crystallite size. However, in case where the particles include coarse particles having polycrystalline structures, there is possibility to measure the sizes of the crystallites contained in such coarse particles. Therefore, it is necessary to confirm conformity between the particle diameter found from the average crystallite size and the particle diameter observed with TEM.

Next, a membrane electrode assembly (MEA) for use in a fuel cell, manufactured using the fine particle-supporting carbon particles, will be described as a specific example of the electrode of a fuel cell using the fine particle-supporting carbon particles of the present invention as an electrocatalyst.

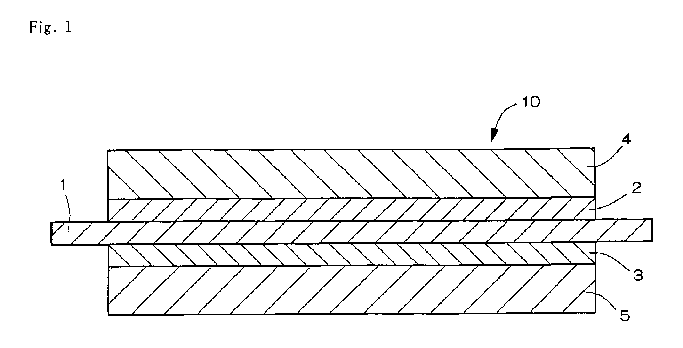

Fig. 1 shows the schematic cross section of a membrane electrode assembly (MEA) for a fuel cell. This membrane electrode assembly 10 comprises an air electrode 2 disposed on one side of a solid polymer electrolytic membrane 1 in the thickness direction, a fuel electrode 3 disposed on the other side thereof, a gas-diffusion layer 4 for the air electrode, disposed outside the air electrode 2, and a gas-diffusion layer 5 for the fuel electrode, disposed outside the fuel electrode 3. As the solid polymer electrolytic membrane 1, there can be used polyperfluorosulfonic acid resin membranes such as "Nafion®" of DuPont, "Flemion®" of Asahi Glass Company Ltd., "Asiplex®" of Asahi Chemical Industry Co., Ltd., etc. As the gas-diffusion layers 4 and 5, porous carbon cloths or carbon sheets can be used. The following general method can be employed to manufacture this membrane electrode assembly 10.

Catalyst-supporting carbon particles, a polymer material, and if needed, a binder are mixed into a solvent comprising a lower alcohol such as ethanol or propanol as a main component, and they are dispersed with a general disperser such as a magnetic stirrer, ball mill, ultrasonic disperser or the like to prepare a catalytic coating. In this step, the amount of the solvent is adjusted to optimize the viscosity of the coating in accordance with the coating method. Next, the obtained catalytic coating is used to form the air electrode 2 or the fuel electrode 3. As the procedure thereafter, the following three methods (1) to (3) are employed. Any of these methods may be employed as the means for evaluating the fine particle-supporting carbon particles of the present invention. However, it is important that any of the methods should be consistently employed for the evaluation, when the comparative evaluation of the particles is made.

(1) A bar coater or the like is used to uniformly apply the obtained catalytic coating to a releasable substrate such as a polytetrafluoroethylene (PTFE) film, polyethylene terephthalate (PET) film, polyimide film, PTFE coated polyimide film, PTFE coated silicon sheet, PTFE coated glass cloth or the like; and the catalytic coating is dried to form an electrode membrane on the releasable substrate. The electrode membrane is peeled off and is cut into pieces with predetermined electrode sizes. Two kinds of such electrode membranes are prepared to be used as an air electrode and a fuel electrode, respectively. After that, the electrode membranes are jointed on both sides of a solid polymer electrolytic membrane by hot press or hot roll press; and then, the gas-diffusion layers are disposed outside the air electrode and the fuel electrode, respectively, and all of them are integrated by hot press to provide a membrane electrode assembly.

(2) The obtained catalytic coating is applied to a gas-diffusion layer for an air electrode and a gas-diffusion layer for a fuel electrode, respectively, and is then dried to form an air electrode and a fuel electrode. In this step, spray coating or screen printing is employed as the coating method. Next, the gas-diffusion layers having these electrode membranes formed thereon, respectively, are allowed to hold a solid polymer electrolytic membrane therebetween, and all of them are integrated by hot press to provide a membrane electrode assembly.

(3) The obtained catalytic coating is applied to both sides of a solid polymer electrolytic membrane by spray coating or the like, and is then dried to form an air electrode and a fuel electrode. After that, gas-diffusion layers are formed outside the air electrode and the fuel electrode, and all of them are integrated by hot press to provide a membrane electrode assembly.

Current collector plates (not shown) are provided on the sides of the air electrode 2 and the fuel electrode 3 of the resultant membrane electrode assembly 10 shown in Fig. 1, respectively, and are electrically connected thereto; and then, a hydrogen gas and an air (an oxygen gas) are supplied to the fuel electrode 3 and the air electrode 2, respectively, to thereby actuate the resultant fuel cell.

### Example 1

### <Carbon particles supporting 20% by weight of La(Fe_{0.95}Pt_{0.05})O₃>

Lanthanum chloride heptahydrate (3.71 g) and iron chloride hexahydrate (2.57 g) were dissolved in water (100 ml), and an equivalent amount of citric acid in terms of lanthanum ions and iron ions was added to the solution to thereby prepare an aqueous solution containing citrate complex ions of lanthanum and iron.

Next, VULCAN XC-72® (carbon black with an average particle diameter of 30 nm available from CABOT, unless otherwise specified) (10 g) as carbon particles was added to the aqueous solution containing the above-described citrate complex ions, and was dispersed therein by means of ultrasonic wave. The resultant dispersion was stirred for 2 hours to adsorb the complex ions onto the surfaces of the VULCAN particles. After that, the dispersion was left to stand alone for about 10 hours, and then was filtered and rinsed and dried at 90°C to obtain carbon particles (powder) each supporting a compound of lanthanum and iron thereon. The resultant carbon particles were subjected to a heat treatment at 600°C under a nitrogen atmosphere to obtain carbon particles which supported thereon fine particles of a perovskite type composite oxide: LaFeO₃.

Next, Hydrogen hexachloroplatinate hexahydrate (0.26 g) was dissolved in ethanol (50 ml) to prepare an ethanol solution containing platinum ions. The carbon particles (powder) which supported thereon LaFeO₃ obtained as above were impregnated with this ethanol solution and dried at 60°C, and were then subjected to a heat treatment at 550°C under a nitrogen atmosphere, to obtain carbon particles which supported thereon fine particles of a perovskite type composite oxide containing a platinum element: La(Fe_{0.95}Pt_{0.05})O₃.

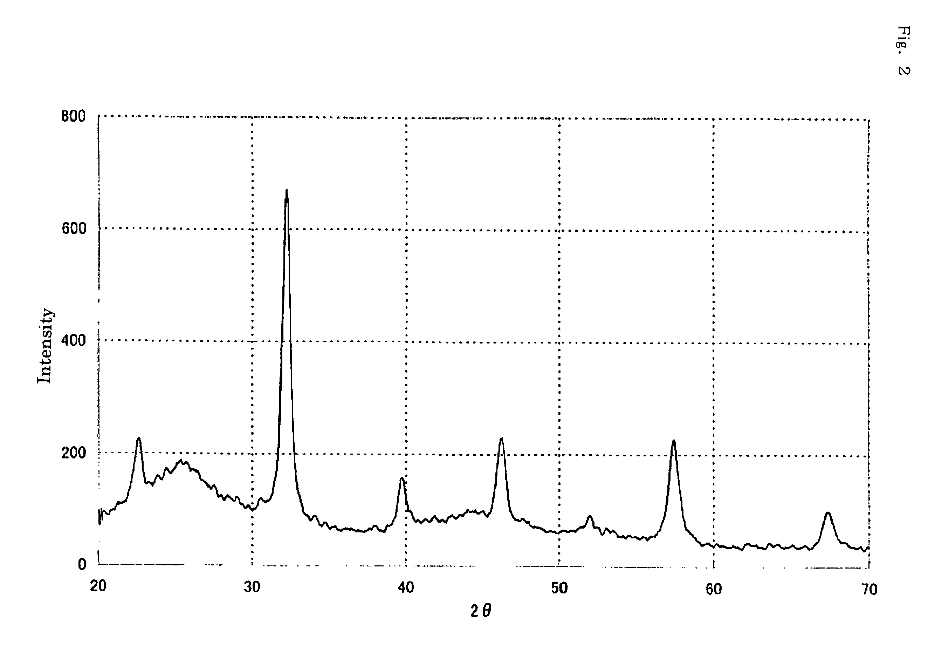

The carbon particles supporting the La(Fe_{0.95}Pt_{0.05})O₃ fine particles thereon, thus obtained, were subjected to a X-ray powder diffraction spectrometry. As a result, the definite peaks of the single phase of a perovskite structure as shown in Fig. 1 were observed, and it was confirmed that the lattice constant slightly changed in comparison with the lattice constant of the perovskite structure containing no platinum element. Since no peak showing a structure attributed to platinum was not observed in spite of containing the platinum element, it was found that the platinum element was taken into the lattice of the perovskite structure. The average crystallite size determined from the half value width of the diffraction peak was 11.2 nm. As a result of the observation with a transmission electron microscope (TEM), it was confirmed that the fine particles of the composite metal oxide, with a size of about 10 nm, were supported on the surfaces of the carbon particles as shown in Fig. 2. The analyses of the composition and the amount of the supported particles were conducted by fluorescent X-ray analysis and XPS.

### Example 2

### <Carbon particles supporting 40% by weight of La(Fe_{0.95}Pt_{0.05})O₃>

Carbon particles supporting fine particles of a perovskite type composite oxide containing a platinum element: La(Fe_{0.95}Pt_{0.05})O₃ were obtained in the same manner as in Example 1, except that, in the process for manufacturing the fine particle-supporting carbon particles of Example 1, VULCAN XC-72 (3.75 g) was added to the aqueous solution containing citrate complex ions of lanthanum and iron.

The carbon particles supporting the La(Fe_{0.95}Pt_{0.05})O₃ thereon, thus obtained, were subjected to a X-ray powder diffraction spectrometry. As a result, the definite peaks of the single phase of a perovskite structure were observed as in Example 1, and it was confirmed that the platinum element was taken into the lattice of the perovskite structure. The lattice constant was found to slightly change in comparison with the lattice constant of the perovskite structure containing no platinum element. The average crystallite size determined from the half value width of the diffraction peak was 10.5 nm. As a result of the observation with a transmission electron microscope (TEM), it was confirmed that the fine particles of the composite metal oxide, with a size of about 10 nm, were supported on the surfaces of the carbon particles.

### Example 3

### <Fine particle-supporting carbon particles obtained using nitrate raw materials>

Carbon particles which supported thereon fine particles of a perovskite type composite oxide containing a platinum element: La(Fe_{0.95}Pt_{0.05})O₃ were obtained in the same manner as in Example 1, except the following: in the process of Example 1, lanthanum nitrate (4.46 g) and iron nitrate (3.95 g), but not lanthanum chloride and iron chloride, were dissolved in water (100 ml); and an equivalent amount of citric acid in terms of lanthanum ions and iron ions was added to the above solution to prepare an aqueous solution containing the citrate complex ions of lanthanum and iron.

The carbon particles supporting the La(Fe_{0.9}Pt_{0.05})O₃ thereon, thus obtained, were subjected to a X-ray powder diffraction spectrometry. As a result, the definite peaks of the single phase of a perovskite structure were observed as in Example 1, and it was confirmed that the platinum element was taken into the lattice of the perovskite structure. The lattice constant was found to slightly change in comparison with the lattice constant of the perovskite structure containing no platinum element. The average crystallite size determined from the half value width of the diffraction peak was 9.5 nm. As a result of the observation with a transmission electron microscope (TEM), it was confirmed that the fine particles of the composite metal oxide, with a size of about 10 nm, were supported on the surfaces of the carbon particles.

### Example 4

### <Carbon particles supporting 20% by weight of La(Fe_{0.95}Pt_{0.05})O₃>

Carbon particles which supported thereon fine particles of a perovskite type composite oxide containing a platinum element: La (Fe_{0.95}Pt_{0.05})O₃ were obtained in the same manner as in Example 1, except the following: in the process of Example 1, the amount of water for use in the preparation of an aqueous solution containing citrate complex ions was changed to 50 ml from 100 ml; carbon particles supporting fine particles of a perovskite type composite oxide: LaFeO₃ were obtained from the above solution in the same manner as in Example 1; potassium chloroplatinate (0.25 g) was dissolved in water (50 ml) to prepare an aqueous solution containing platinum ions; and the above carbon particles (powder) supporting LaFeO₃ particle thereon were impregnated with this aqueous solution containing platinum ions.

The carbon particles supporting La(Fe_{0.95}Pt_{0.05})O₃ thereon, thus obtained, were subjected to a X-ray powder diffraction spectrometry. As a result, the definite peaks of the single phase of a perovskite structure were observed as in Example 1, and it was confirmed that the platinum element was taken into the lattice of the perovskite structure. The lattice constant was found to slightly change in comparison with the lattice constant of the perovskite structure containing no platinum element. The average crystallite size determined from the half value width of the diffraction peak was 17.8 nm. As a result of the observation with a transmission electron microscope (TEM), it was confirmed that the fine particles of the composite metal oxide, with a size of about 15 to about 20 nm, were supported on the surfaces of the carbon particles.

### Example 5

### <Carbon particles supporting 20% by weight of La (Fe_{0.95}Pt_{0.05})O₃>

Carbon particles supporting fine particles of a perovskite type composite oxide containing a platinum element: La(Fe_{0.95}Pt_{0.05})O₃ were obtained in the same manner as in Example 1, except the following: in the process of Example 1, instead of the aqueous solution containing citrate complex ions, an aqueous solution containing citrate complex ions of lanthanum and iron was prepared by dissolving lanthanum chloride heptahydrate (3.71 g) and iron chloride hexahydrate (2.57 g) in an ethanol solution of ethanol (50 ml) and water (50 ml), and adding an equivalent amount of citric acid in terms of lanthanum ions and iron ions to the above solution.

The carbon particles supporting the La(Fe_{0.95}Pt_{0.05})O₃ thereon, thus obtained, were subjected to a X-ray powder diffraction spectrometry. As a result, the definite peaks of the single phase of a perovskite structure were observed as in Example 1, and it was confirmed that the platinum element was taken into the lattice of the perovskite structure. The lattice constant was found to slightly change in comparison with the lattice constant of the perovskite structure containing no platinum element. The average crystallite size determined from the half value width of the diffraction peak was 3.3 nm. As a result of the observation with a transmission electron microscope (TEM), it was confirmed that the fine particles of the composite metal oxide, with a size of about 3 to about 5 nm, were supported on the surfaces of the carbon particles.

### Example 6

### <Carbon particles supporting 20% by weight of La(Fe_{0.5}Pt_{0.5})O₃>

Lanthanum chloride heptahydrate (3.71 g), iron chloride hexahydrate (1.29 g) and potassium chloroplatinate (2.5 g) were dissolved in water (100 ml), and an equivalent amount of citric acid in terms of lanthanum ions, iron ions and platinum ions was added to the solution, to thereby prepare an aqueous solution containing citrate complex ions of lanthanum, iron and platinum.

Next, VULCAN XC-72 (12.45 g) was added to the aqueous solution containing the above-described citrate complex ions, and was dispersed therein by means of ultrasonic wave. The resultant dispersion was stirred for 2 hours to adsorb the complex ions onto the surfaces of the VULCAN particles. After that, the dispersion was left to stand alone for about 10 hours, and then was filtered and rinsed and dried at 90°C to obtain carbon particles (powder) each supporting a compound of lanthanum, iron and platinum thereon. The resultant carbon particles were subjected to a heat treatment at 600°C under a nitrogen atmosphere to obtain carbon particles which supported thereon fine particles of a perovskite type composite oxide: La(Fe_{0.5}Pt_{0.5})O₃.

The carbon particles supporting the La(Fe_{0.5}Pt_{0.5})O₃ fine particles thereon, thus obtained, were subjected to a X-ray powder diffraction spectrometry. As a result, the definite peaks of the single phase of a perovskite structure were observed as in Example 1, and it was confirmed that the platinum element was taken into the perovskite structure. It was also confirmed that the lattice constant slightly changed in comparison with the lattice constant of the perovskite structure containing no platinum element. The average crystallite size determined from the half value width of the diffraction peak was 16.8 nm. As a result of the observation with a transmission electron microscope (TEM), it was confirmed that the fine particles of the composite metal oxide, with a size of about 15 to about 20 nm, were supported on the surfaces of the carbon particles.

### Example 7

### <Carbon particles supporting 20% by weight of LaPtO₃>

Lanthanum chloride heptahydrate (0.48 g) and Hydrogen hexachloroplatinate hexahydrate (0.68 g) were dissolved in water (25 ml), and an equivalent amount of citric acid in terms of lanthanum ions and platinum ions was added to the solution, to thereby prepare an aqueous solution containing citrate complex ions of lanthanum and platinum.

Next, VULCAN XC-72 (2 g) was added to the aqueous solution containing the above-described citrate complex ions, and was dispersed therein by means of ultrasonic wave. The resultant dispersion was stirred for 2 hours to adsorb the complex ions onto the surfaces of the VULCAN particles. After that, the dispersion was left to stand alone for about 10 hours, and then was filtered and rinsed and dried at 90°C to obtain carbon particles (powder) each supporting a compound of lanthanum and platinum thereon. The resultant carbon particles were subjected to a heat treatment at 750°C under a nitrogen atmosphere to obtain carbon particles which supported thereon fine particles of a perovskite type composite oxide: LaPtO₃.

The carbon particles supporting the LaPtO₃ fine particles thereon, thus obtained, were subjected to a X-ray powder diffraction spectrometry. As a result, the definite peaks of the single phase of a perovskite structure were observed. The average crystallite size determined from the half value width of the diffraction peak was 18.2 nm. As a result of the observation with a transmission electron microscope (TEM), it was confirmed that the fine particles of the composite metal oxide, with a size of about 20 nm, were supported on the surfaces of the carbon particles.

### Example 8

### <Carbon particles supporting 20% by weight of La(Fe_{0.57}Co_{0.38}Pt_{0.05})O₃>

Lanthanum chloride heptahydrate (3.71 g), iron chloride hexahydrate (1.54 g) and cobalt chloride monohydrate (0.9 g) were dissolved in water (100 ml), and an equivalent amount of citric acid in terms of lanthanum ions, iron ions and cobalt ions was added to the solution, to thereby prepare an aqueous solution containing citrate complex ions of lanthanum, iron and cobalt.

Next, VULCAN XC-72 (10 g) was added to the aqueous solution containing the above-described citrate complex ions, and was dispersed therein by means of ultrasonic wave. The resultant dispersion was stirred for 2 hours to adsorb the complex ions onto the surfaces of the VULCAN particles. After that, the dispersion was left to stand alone for about 10 hours, and then was filtered and rinsed and dried at 90°C to obtain carbon particles (powder) each supporting a compound of lanthanum, iron and cobalt thereon. The resultant carbon particles were subjected to a heat treatment at 600°C under a nitrogen atmosphere to obtain carbon particles which supported thereon fine particles of a perovskite type composite oxide: La(Fe_{0.6}Co_{0.4})O₃.

Next, the above La(Fe_{0.6}Co_{0.4})O₃ particle-supporting carbon particles were treated in the same manner as in Example 1, to support platinum thereon. Thus, carbon particles supporting fine particles of a perovskite type composite oxide containing platinum lelement: La(Fe_{0.57}Co_{0.38}Pt_{0.05})O₃ were obtained.

The carbon particles supporting the La(Fe_{0.57}Co_{0.38}P_{0.05})O₃ fine particles thereon, thus obtained, were subjected to a X-ray powder diffraction spectrometry. As a result, the definite peaks of the single phase of a perovskite structure were observed, and it was confirmed that the platinum element was taken into the lattice of the perovskite structure. The lattice constant was found to slightly change in comparison with the lattice constant of the perovskite structure containing no platinum element. The average crystallite size determined from the half value width of the diffraction peak was 12.2 nm. As a result of the observation with a transmission electron microscope (TEM), it was confirmed that the fine particles of the composite metal oxide, with a size of about 10 to about 15 nm, were supported on the surfaces of the carbon particles.

### Example 9

### <Carbon particles supporting 20% by weight of Ce(Fe_{0.95}Pt_{0.05})O₃>

Carbon particles supporting fine particles of a perovskite type composite oxide containing a platinum element: Ce(Fe_{0.95}Pt_{0.05})O₃ were obtained as follows: in the process of Example 1, CeFeO₃-supporting carbon particles were obtained in the same manner as in Example 1, except that cerium chloride heptahydrate (3.73 g) was added in place of the lanthanum chloride heptahydrate; and then, the resulting carbon particles were treated to support platinum thereon, to obtain carbon particles supporting fine particles of the perovskite type composite oxide containing the platinum element: Ce(Fe_{0.95}Pt_{0.05})O₃.

The carbon particles supporting the Ce(Fe_{0.95}Pt_{0.05})O₃ thereon, thus obtained, were subjected to a X-ray powder diffraction spectrometry. As a result, the definite peaks of the single phase of a perovskite structure were observed, and it was confirmed that the platinum element was taken into the lattice of the perovskite structure. The average crystallite size determined from the half value width of the diffraction peak was 7.2 nm. As a result of the observation with a transmission electron microscope (TEM), it was confirmed that the fine particles of the composite metal oxide, with a size of about 5 to about 10 nm, were supported on the surfaces of the carbon particles.

### Example 10

### <Carbon particles supporting 20% by weight of (La_{0.7}Sr_{0.3}) (Fe_{0.95}Pt_{0.05})O₃>

Carbon particles supporting fine particles of a perovskite type composite oxide containing a platinum element: (La_{0.7}Sr_{0.3}) (Fe_{0.95}Pt_{0.05})O₃ were obtained as follows: in the process of Example 1, carbon particles supporting particles of (La_{0.7}Sr_{0.3})FeO₃ thereon were obtained in the same manner as in Example 1, except that lanthanum chloride heptahydrate (2.6 g) and strontium chloride hexahydrate (0.8 g) were added in place of the lanthanum chloride heptahydrate (3.71 g); and the resulting carbon particles were treated to support platinum thereon, to obtain the carbon particles supporting fine particles of the perovskite type composite oxide containing the platinum element: (La_{0.7}Sr_{0.3}) (Fe_{0.95}Pt_{0.05})O₃.

The carbon particles supporting the (La_{0.7}Sr_{0.3}) (Fe_{0.95}Pt_{0.05})O₃ thereon, thus obtained, were subjected to a X-ray powder diffraction spectrometry. As a result, the definite peaks of the single phase of a perovskite structure were observed, and it was confirmed that the platinum element was taken into the lattice of the perovskite structure. The average crystallite size determined from the half value width of the diffraction peak was 15.7 nm. As a result of the observation with a transmission electron microscope (TEM), it was confirmed that the fine particles of the composite metal oxide, with a size of about 15 nm, were supported on the surfaces of the carbon particles.

### Example 11

### <Carbon particles supporting 20% by weight of La(Pt_{0.9}Ru_{0.1})O₃>

Carbon particles supporting fine particles of a perovskite type composite oxide: La(Pt_{0.9}Ru_{0.1})O₃ were obtained in the same manner as in Example 7, except that an aqueous solution containing citrate complex ions of lanthanum, ruthenium and platinum was prepared by dissolving lanthanum chloride heptahydrate (0.48 g), ruthenium chloride (0.03 g) and Hydrogen hexachloroplatinate hexahydrate (0.61 g) in water (100 ml), and adding an equivalent amount of citric acid in terms of lanthanum ions, ruthenium ions and platinum ions to the solution.

The carbon particles supporting the La(Pt_{0.9}Ru_{0.1})O₃ thereon, thus obtained, were subjected to a X-ray powder diffraction spectrometry. As a result, the definite peaks of the single phase of a perovskite structure were observed, and it was confirmed that the platinum element and the ruthenium element were taken into the lattice of the perovskite structure. The average crystallite size determined from the half value width of the diffraction peak was 13.1 nm. As a result of the observation with a transmission electron microscope (TEM), it was confirmed that the fine particles of the composite metal oxide, with a size of about 15 nm, were supported on the surfaces of the carbon particles.

### Example 12

### <Carbon particles supporting 20% by weight of SrRuO₃>

Carbon particles supporting fine particles of a perovskite type composite oxide: SrRuO₃ were obtained in the same manner as in Example 7, except that an aqueous solution containing citrate complex ions of strontium and ruthenium was prepared by dissolving strontium chloride hexahydrate (0.34 g) and ruthenium chloride (0.27 g) in water (100 ml), and adding an equivalent amount of citric acid in terms of strontium ions and ruthenium ions to the solution.

The carbon particles supporting the SrRuO₃ thereon, thus obtained, were subjected to a X-ray powder diffraction spectrometry. As a result, the definite peaks of the single phase of a perovskite structure were observed as in Example 1, and it was confirmed that the ruthenium element was taken into the lattice of the perovskite structure. The average crystallite size determined from the half value width of the diffraction peak was 11.8 nm. As a result of the observation with a transmission electron microscope (TEM), it was confirmed that the fine particles of the composite metal oxide, with a size of about 10 nm, were supported on the surfaces of the carbon particles.

### Comparative Example 1

### <Carbon particles supporting 60% by weight of La(Fe_{0.95}Pt_{0.05})O₃>

Carbon particles supporting fine particles of a perovskite type composite oxide containing a platinum element: La(Fe_{0.95}Pt_{0.05})O₃ were obtained in the same manner as in Example 1, except that, in the process of Example 1, VULCAN XC-72 (1.67 g) was added to an aqueous solution containing citrate complex ions of lanthanum and iron.

The carbon particles supporting the La (Fe_{0.95}Pt_{0.05})O₃ thereon, thus obtained, were subjected to a X-ray powder diffraction spectrometry. As a result, the definite peaks of the single phase of a perovskite structure were observed as in Example 1, and it was confirmed that the platinum element was taken into the lattice of the perovskite structure. The average crystallite size determined from the half value width of the diffraction peak was 87.3 nm. As a result of the observation with a transmission electron microscope (TEM), the fine particles of the composite metal oxide, with a size of about 15 nm, were supported on the surfaces of the carbon particles, and perovskite type composite oxide particles with a size of from about 70 to about 100 nm were observed. Thus, the perovskite type composite oxide particles which could not be supported on the carbon particles were found to be separated and deposited.

### Comparative Example 2

### <Carbon particles supporting 20% by weight of La (Fe_{0.95}Pt_{0.05})O₃>

Carbon particles supporting fine particles were obtained in the same manner as in Example 1, except the following: in the process of Example 1, carbon particles (powder) each supporting thereon a compound of lanthanum and iron were obtained by adsorbing the complex ions of lanthanum and iron onto the surfaces of VULCAN particles, and were then subjected to a heat treatment at 450°C under a nitrogen atmosphere; and the resulting carbon particles were impregnated with an ethanol solution containing platinum ions, dried at 60°C and subjected to a heat treatment at 450°C under a nitrogen atmosphere.

The carbon particles supporting the La(Fe_{0.95}Pt_{0.05})O₃ thereon, thus obtained, were subjected to a X-ray powder diffraction spectrometry. As a result, no peak of a perovskite structure was observed, and the peak of carbon alone was observed. As a result of the observation with a transmission electron microscope (TEM), the fine particles of the metal oxide, with a size of about 2 nm, were found to be supported on the surfaces of the carbon particles.

### Comparative Example 3

### <Carbon particles supporting 10% by weight of Pt and 20% by weight of LaFeO₃>

In the process of Example 1, complex ions of lanthanum and iron were adsorbed not onto the surfaces of VULCAN particles, but onto platinum particle-supporting carbon particles which previously supported 10% by weight of platinum particles (with an average particle diameter of 5 nm) on the surfaces of the carbon particles based on the weight of the carbon particles, to obtain carbon particles (powder) each supporting a compound of lanthanum and iron and platinum particles, and such carbon particles were subjected to a heat treatment at 600°C under a nitrogen atmosphere to obtain carbon particles supporting particles of a perovskite type composite oxide: LaFeO₃ and platinum particles thereon.

The carbon particles supporting such fine particles, thus obtained, were subjected to a X-ray powder diffraction spectrometry. As a result, the peaks of the perovskite structure and the peak of the platinum metal were observed. The average crystallite sizes determined from the half value widths of the diffraction peaks were 14.6 nm and 5.6 nm, respectively. As a result of the observation with a transmission electron microscope (TEM), the particles of the composite metal oxide, with a particle size of about 15 nm, and the platinum particles with a particle size of about 5 nm were found to be supported on the surfaces of the carbon particles.

### Comparative Example 4

### <Carbon particles supporting 20% by weight of LaFeO₃>

Carbon particles supporting particles of a perovskite type composite oxide: LaFeO₃ were obtained in the same manner as in Example 1. The resulting carbon particles were not impregnated with platinum.

The carbon particles supporting the LaFeO₃ particles thereon, thus obtained,' were subjected to a X-ray powder diffraction spectrometry. As a result, the definite peaks of the single phase of a perovskite structure were observed as in Example 1. The average crystallite size determined from the half value width of the diffraction peak was 9.8 nm. As a result of the observation with a transmission electron microscope (TEM), the fine particles of the composite metal oxide, with a size of about 10 nm, were found to be supported on the surfaces of the carbon particles.

### Comparative Example 5

### <Carbon particles supporting 10% by weight of PtO>

Hydrogen hexachloroplatinate hexahydrate (2.70 g) was dissolved in ethanol (200 ml) to prepare an ethanol solution containing platinum ions. VULCAN XC-72 particles were impregnated with this platinum ion-containing ethanol solution, dried at 60°C and subjected to a heat treatment at 270°C in an air to obtain carbon particles supporting particles of platinum oxide: PtO.

The carbon particles supporting the PtO particles thereon, thus obtained, were subjected to a X-ray powder diffraction spectrometry. As a result, the definite peaks of the single phase of the platinum oxide were observed. The average crystallite size determined from the half value width of the diffraction peak was 5.2 nm. As a result of the observation with a transmission electron microscope (TEM), the particles of the platinum oxide, with a particle size of about 5 nm, were found to be supported on the surfaces of the carbon particles.

Table 1 shows the results of Examples 1 to 12 and Comparative Examples 1 to 5. In this regard, the particle diameter of the supported particles indicates the particle diameter of the supported oxide particles determined from the average crystallite size; the particle diameter found using TEM indicates the approximate particle diameter of the supported oxide particles, which was visually confirmed through the observation with the TEM; and the average particle diameter indicates the average particle diameter of the fine particle-supporting carbon particles determined from an average of the particle diameters of 100 particles on a TEM photograph.

**[Table 1]**

| <Carbon Particles Supporting Thereon Fine Particles of a Perovskite Type Composite Oxide> | | | | | | | |
|---|---|---|---|---|---|---|---|
| | Composition | Crystalline structure | Supported particle Wt.% | Particle diameter of supported particles (nm) | Particle diameter (nm) found with TEM | Av. particle diameter (nm) | Max. output density (W/g-Pt) |
| Ex. 1 | La(Fe_{0.95}Pt_{0.05})O₃ | Perovskite | 20 wt.% | 11.2 | ~ 10 | 38.5 | 5.3 |
| Ex. 2 | La(Fe_{0.95}Pt_{0.05})O₃ | Perovskite | 40 wt.% | 10.5 | ~ 10 | 41.2 | 5.5 |
| Ex. 3 | La(Fe_{0.95}Pt_{0.05})O₃ | Perovskite | 20 wt.% | 9.5 | ~ 10 | 40.9 | 5.1 |
| Ex. 4 | La(Fe_{0.95}Pt_{0.05})O₃ | Perovskite | 20 wt.% | 17.8 | 15 to 20 | 44.3 | 4.4 |
| Ex. 5 | La(Fe_{0.95}Pt_{0.05})O₃ | Perovskite | 20 wt.% | 3.3 | 3 to 5 | 35.1 | 6.2 |
| Ex. 6 | La(Fe_{0.5}Pt_{0.5})O₃ | Perovskite | 20 wt.% | 16.8 | 15 to 20 | 48.1 | 4.4 |
| Ex. 7 | LaPtO₃ | Perovsl:ite | 20 wt.% | 18.2 | ~ 20 | 47.7 | 4.2 |
| Ex. 8 | La(Fe_{0.57}Co_{0.38}Pt_{0.05})O₃ | Perovskite | 20 wt.% | 12.2 | 10 to 15 | 40.5 | 6.1 |
| Ex. 9 | Ce(Fe_{0.95}Pt_{0.05})O₃ | Perovskite | 20 wt.% | 7.2 | 5 to 10 | 35.8 | 5.1 |
| Ex. 10 | (La_{0.7}Sr_{0.3})-(Fe_{0.95}Pt_{0.05})O₃ | Perovskite | 20 wt.% | 15.7 | ~ 15 | 42.9 | 5.8 |
| Ex. 11 | La(Pt_{0.8}Ru_{0.1})O₃ | Perovskite | 20 wt.% | 13.1 | ~ 15 | 44.7 | 4.2 |
| Ex. 12 | SrRuO₃ | Perovskite | 20 wt.% | 11.8 | ~ 10 | 39.2 | 4.5 |
| C.Ex.1 | La(Fe_{0.95}Pt_{0.05})O₃ | Perovskite | 60 wt.% | 87.3 (separated and deposited) | - 15 & 70 to 100 | - | 1.5 |
| C.Ex.2 | La(Fe_{0.95}Pt_{0.05})O₃ | Amorphous | 20 wt.% | - | ~ 2 | 32.8 | 0.3 |
| C.Ex.3 | LaFeO₃ + Pt | Perovskite + platinum metal | 20 wt.% (Pt: 10 wt.%) | 19.6 (Pt: 5.6) | 15 (pt: ~ 5) | 97.1 | 6.7 |
| C.Ex.4 | LaFeO₃ | Perovskite | 20 wt.% | 9.8 | ~ 10 | 37.4 | ~ 0 |
| C.Ex.5 | PtO | Platinum oxide | 10 wt.% | 5.2 | ~ 5 | 35.1 | 0.6 |

### Example 13

In this Example, membrane electrode assemblys (MEA) for fuel cells were assembled to evaluate the output features of fuel cells comprising the same MEAs, so as to evaluate the catalytic properties of the fine particle-supporting carbon particles of the above-described Examples and Comparative Examples. When the above-described fine particle-supporting carbon particles are used in electrodes constituting a membrane electrode assembly (MEA), the compositions of the oxides for the fine particle-supporting carbon particles (i.e., the composition of fine oxide particles supported on carbon particles) capable of exhibiting maximum effects are different between the air electrode and the fuel electrode. In this Example, the fine particle-supporting carbon particles were used in the air electrodes, and the following standard electrode membranes were used as the fuel electrodes, in order to make consistent evaluation.

### <Electrode membrane comprising fine particle-supporting carbon particles>

The fine particle-supporting carbon particles (1 part by mass) obtained in each of the above-described Examples and Comparative Examples were added to a mixture of "Nafion®" (EW = 1,000, manufactured by Aldrich) (9.72 parts by mass) which was a solution containing 5% by mass of a polyperfluorosulfonic acid resin, "Nafion®" (manufactured by DuPont) (2.52 parts by mass) which was a solution containing 20% by mass of a polyperfluorosulfonic acid resin, and water (1 part by mass); and the resulting mixture was sufficiently stirred and homogenously dispersed to prepare a catalytic coating. Next, the catalytic coating was applied to a PTFE film so that the amount of the supported platinum could be 0.03 mg/cm², and was dried. The dried layer of the catalytic coating was peeled off as an electrode membrane comprising the fine particle-supporting carbon particles.

### <Standard electrode membrane>

A catalytic coating was prepared in the same manner as above, using platinum-supporting carbon particles "10E50E®" (manufactured by Tanaka Kikinzoku Kogyo) which supported 50% by mass of platinum, and was then applied to a PTFE film so that the amount of the supported platinum could be 0.5 mg/cm². The applied catalytic coating was dried and peeled off as a standard electrode membrane.

### <Membrane electrode assembly>

A polyperfluorosulfonic acid resin membrane "Nafion 112®" (manufactured by DuPont) was cut into pieces with a predetermined size for use as a solid polymer electrolytic membrane. The electrode membrane comprising the fine particle-supporting carbon particles and the standard electrode membrane, prepared in advance, were laminated on both sides of the solid polymer electrolytic membrane, respectively, and the resulting lamination was hot-pressed at 160°C under a pressure of 4.4 MPa to joint these membranes. Next, a non-woven carbon cloth which had been previously water-proofed (TGP-H-120 manufactured by Toray Industries, Inc.) and the solid polymer electrolytic membrane having the electrode membranes formed on its both sides were jointed to each other by hot press to obtain a membrane electrode assembly.

### [Evaluation of Output Feature]

The output feature of a fuel cell (i.e., a maximum output density per unit amount of platinum) comprising the above electrode membrane assembly was measured. In this measurement, a measuring system including the membrane electrode assembly was maintained at 60°C, and the measurement was conducted while supplying a hydrogen gas humidified and heated at 60°C to the fuel electrode side, and an air humidified and heated at 60°C to the air electrode side. The results of the measurements are collectively shown in Table 1 above.

### [Evaluation of Resistance to Oxidation]

To evaluate the resistance of the fine particle-supporting carbon particles to oxidation in an air, the fine particle-supporting carbon particles obtained in Example 1 and Comparative Example 3 were selected as ones having typical compositions; and changes in the physical properties of these carbon particles in an air were measured. Prior to the measurements, the respective fine particle-supporting carbon particles were previsously oxidized at 150°C for 48 hours in an air.

The respective fine particle-supporting carbon particles oxidized as above were subjected to X-ray powder diffraction spectrometry so as to examine their crystalline structures. As a result, the fine particle-supporting carbon particles of Example 1 had a perovskite structure and showed no change in its structure, in comparison with the structure thereof found before the oxidation treatment, while the fine particle-supporting carbon particles of Comparative Example 3 were observed to have two phases, i.e., a perovskite structure and a platinum metal structure before the oxidation treatment, and were observed to have three phases, i.e., a perovskite structure, a platinum metal structure and a platinum oxide structure (PtO) after the oxidation treatment.

The respective fine particle-supporting carbon particles were further observed with TEM. As a result, it was observed from the fine particle-supporting carbon particles of Example 1 that the particles with a size of about 10 nm were supported on the carbon particles, and that the particle size showed almost no change as compared with the particle size found before the oxidation treatment, while it was observed from the platinum particle-supporting carbon particles of Comparative Example 3 that the oxide particles with a size of about 15 nm and the platinum particles with a size of about 8 to about 9 nm were supported on the carbon particles, and that the particle diameter of the platinum particles was increased as compared with the size of about 5 nm found before the oxidation treatment.

Next, the respective fine particle-supporting carbon particles which already had been oxidized were used to assemble membrane electrode assemblies in the same manner as in Example 13 so as to evaluate the output features. As a result, the maximum output from the membrane electrode assembly comprising the fine particle-supporting carbon particles of Example 1 was 5.2 W/g-Pt, while the maximum output from the membrane electrode assembly comprising the fine particle-supporting carbon particles of Comparative Example 3 was 2.5 W/g-Pt.

The results of the evaluation of the resistances to oxidation and the output features are collectively shown in Table 2.

**[Table 2]**

| <Results of Evaluation of Resistance to Oxidation> | | | | | | |
|---|---|---|---|---|---|---|
| | Crystalline structure | | Particle diameter (nm) of supported particle | | Output feature (W/g-Pt) | |
| | Before Treatment | After Treatment | Before Treatment | After Treatment | Before Treatment | After Treatment |
| Ex. 1 | Perovskite | Perovskite | 11.2 | 11.1 | 5.3 | 5.2 |
| C.EX.3 | Perovskite + platinum metal | Perovskite + platinum metal + platinum oxide | 14.6 5.6(pt) | 14.7 8.7(pt) | 6.7 | 3.1 |

As is apparent from Table 1, the fine particle-supporting carbon particles obtained in any of the Examples were observed to have a single phase of perovskite structure and to have an average crystallite size of not larger than 20 nm. On the other hand, the fine particle-supporting carbon particles obtained in Comparative Example 1 were observed to include coarse particles with a maximum size of 100 nm, since the perovskite type composite oxide particles which could not be supported on the surfaces of the carbon particles because of the excessive charged amounts were separated and deposited. The fine particle-supporting carbon particles of Comparative Example 2 were observed to fail to form a perovskite structure and to have only the structure of the carbon support, since the temperature for the heat treatment did not reach the crystallization temperature.

Next, as a result of the evaluation of the characteristics as the air electrodes of the fuel cells, the use of the fine particle-supporting carbon particles of the respective Examples was found to apparently enable the generation of electric power. On the other hand, the use of the fine particle-supporting carbon particles of Comparative Examples 1 and 2, having the crystalline structures different from the intended one, was found to lower the output features. The use of the fine particle-supporting carbon particles of Comparative Example 4 was found to be impossible to obtain any output feature, even when only the perovskite type oxide particles were supported on the carbon particles. From this fact, it was known that the features revealed by the use of the fine particle-supporting carbon particles of Examples were not attributed to the oxides. Further, the use of the carbon particles supporting platinum oxide particles PtO alone as indicated in Comparative Example 5 was found to make it hard to obtain sufficient output features. Thus, it is known that particles in a state of simple platinum oxide have almost no catalytic function, as has been considered so far.

As indicated in Table 1, the air electrode of the fuel cell comprising the fine particle-supporting carbon particles of Comparative Example 3 was evaluated to have equal or superior features to those of the air electrodes comprising the fine particle-supporting carbon particles of the respective Examples. On the other hand, as indicated in Table 2, the fine particle-supporting carbon particles of Example 1, oxidized in an air, showed almost no change in their crystalline structure and average particle diameter, while the platinum particle-supporting carbon particles of Comparative Example 3 showed a change in the crystalline structure, i.e., from the structure of "platinum metal" to the structure of "platinum metal + platinum oxide" and also showed an increase in the average particle diameter, accompanied by a remarkable decrease in the output feature.

As has been described above, it is revealed that, while a platinum element in an oxide form intrinsically can not exhibit a catalytic function, a platinum element introduced as a solid solution into an oxide having a perovskite structure can show an output feature and can have a catalytic function only when the particle diameter of such oxide particles is very fine. A platinum in the form of an oxide hitherto has been believed to exhibit no catalytic function, since the platinum oxide has no platinum-platinum bond. However, in the present invention, it has been firstly revealed that a platinum element introduced as a solid solution into an oxide of other element so as to be in the form of an oxide can exhibit a catalytic function. A platinum element in the form of an oxide is not likely to be degraded by further oxidization, and is not likely to be degraded because of coarse particles attributed to the aggregation of particles since there is no platinum-platinum metal bond. From these viewpoints, the present invention provides an important measure to achieve the subject matters, i.e., to prevent the degradation of a catalyst, and to improve the durability of the catalyst to thereby decrease the amount of the catalyst to be used.

The main and preferred embodiments for carrying out the present invention will be described below.
[1] A fine particle-supporting carbon particle comprising a carbon particle, and fine particles of a perovskite type composite metal oxide supported on the carbon particle, characterized in that the fine particles of a perovskite type composite metal oxide have an average crystallite size of from 1 to 20 nm, and that a noble metal element is contained in the crystal lattice of said composite metal oxide.
[2] The fine particle-supporting carbon particle defined in the above item [1], wherein the fine particle of the perovskite type composite metal oxide is represented by the formula: ABO₃ in which
   A comprises at least one element selected from lanthanum (La), strontium (Sr), cerium (Ce), calcium (Ca), yttrium (Y), erbium (Er), praseodymium (Pr), neodymium (Nd), samarium (Sm), europium (Eu), magnesium (Mg) and barium (Ba).; and
   B comprises at least one transition metal element selected from iron (Fe), cobalt (Co), manganese (Mn), copper (Cu), titanium (Ti), chromium (Cr), nickel (Ni), niobium (Nb), lead (Pb), bismuth (Bi), antimony (Sb) and molybdenum (Mo), and at least one noble metal element, or comprises at least one noble metal element; and wherein the total content of at least one noble metal element in the site B is from 4 to 100 at.% of the elements in the site B.
[3] The fine particle-supporting carbon particle defined in the above item [2], wherein the noble metal element in the crystal lattice of the fine perovskite type composite oxide particle comprises at least one element selected from platinum (Pt), ruthenium (Ru), palladium (Pd) and gold (Au).
[4] The fine particle-supporting carbon particle defined in any of the above items [1] to [3], wherein the amount of the supported fine particles of the perovskite type composite oxide in the fine particle-supporting carbon particle is from 5 to 50% by weight in the weight ratio (i.e., the weight of the fine particles of the perovskite type composite oxide/the weight of the entire fine particle-supporting carbon particle).
[5] The fine particle-supporting carbon particle defined in any of the above items [1] to [4], wherein the average particle diameter of the carbon particles supporting the fine particles of the perovskite type composite oxide is from 20 to 70 nm.
[6] The fine particle-supporting carbon particle defined in any of the above items [1] to [5], wherein the average particle diameter of the fine particle-supporting carbon particles which support thereon the fine particles of the perovskite type composite oxide is from 20 to 90 nm.
[7] A process for manufacturing the fine particle-supporting carbon particle defined in the item [1], comprising the steps of
   firstly, preparing a solution containing a metal constituting the fine particles of a perovskite type composite oxide, and the complex ions of a noble metal,
   dispersing carbon particles in the solution to adsorb the complex ions of the metal onto the carbon particles, and
   subjecting the dispersion to a heat treatment.
[8] A process for manufacturing the fine particle-supporting carbon particle defined in the item [1], comprising the steps of
   firstly, preparing a solution containing a metal constituting the fine particle of a perovskite type composite oxide, and the complex ions of a noble metal,
   dispersing carbon particles in the solution to adsorb the complex ions of the metal onto the carbon particles,
   drying the dispersion, and
   subjecting the dried dispersion to a heat treatment under an inert gas atmosphere, to thereby deposit the fine particles of the composite oxide having a perovskite structure on the surfaces of the carbon particles and to support the fine particles on the carbon particles.
[9] An electrode for a fuel cell, made using the fine particle-supporting carbon particles defined in any of the items [1] to [6] for an electrocatalyst.

## Claims

1. A fine particle-supporting carbon particle comprising a carbon particle, and fine particles of a perovskite type composite metal oxide supported on the carbon particle, **characterized in that** the fine particles of a perovskite type composite metal oxide have an average crystallite size of from 1 to 20 nm, and that a noble metal element is contained in the crystal lattice of said composite metal oxide.

2. The fine particle-supporting carbon particle according to claim 1, wherein the fine particle of the perovskite type composite metal oxide is represented by the formula: ABO₃ in which
A comprises at least one element selected from lanthanum (La), strontium (Sr), cerium (Ce), calcium (Ca), yttrium (Y), erbium (Er), praseodymium (Pr), neodymium (Nd), samarium (Sm), europium (Eu), magnesium (Mg) and barium (Ba); and
B comprises at least one transition metal element selected from iron (Fe), cobalt (Co), manganese (Mn), copper (Cu), titanium (Ti), chromium (Cr), nickel (Ni), niobium (Nb), lead (Pb), bismuth (Bi), antimony (Sb) and molybdenum (Mo), and at least one noble metal element, or comprises at least one noble metal element; and wherein the total content of at least one noble metal element in the site B is from 4 to 100 at.% of the elements in the site B.

3. The fine particle-supporting carbon particle according to claim 2, wherein the noble metal element in the crystal lattice of the fine perovskite type composite oxide particle comprises at least one element selected from platinum (Pt), ruthenium (Ru), palladium (Pd) and gold (Au).

4. The fine particle-supporting carbon particle according to any one of claims 1 to 3, wherein the amount of the supported fine particles of the perovskite type composite oxide in the fine particle-supporting carbon particle is from 5 to 50% by weight in the weight ratio (i.e., the weight of the fine particles of the perovskite type composite oxide/the weight of the entire fine particle-supporting carbon particle).

5. The fine particle-supporting carbon particle according to any one of claims 1 to 4, wherein the average particle diameter of the carbon particles supporting the fine particles of the perovskite type composite oxide is from 20 to 70 nm.

6. The fine particle-supporting carbon particle according to any one of claims 1 to 5, wherein the average particle diameter of the fine particle-supporting carbon particles which support thereon the fine particles of the perovskite type composite oxide is from 20 to 90 nm.

7. A process for manufacturing the fine particle-supporting carbon particle defined in claim 1, comprising the steps of
firstly, preparing a solution containing a metal constituting the fine particles of a perovskite type composite oxide, and the complex ions of a noble metal,
dispersing carbon particles in the solution to adsorb the complex ions of the metal onto the carbon particles, and
subjecting the dispersion to a heat treatment.

8. A process for manufacturing the fine particle-supporting carbon particle defined in claim 1, comprising the steps of
firstly, preparing a solution containing a metal constituting the fine particles of a perovskite type composite oxide, and the complex ions of a noble metal,
dispersing carbon particles in the solution to adsorb the complex ions of the metal onto the carbon particles,
drying the dispersion, and
subjecting the dried dispersion to a heat treatment under an inert gas atmosphere, to thereby deposit the fine particles of the composite oxide having a perovskite structure on the surfaces of the carbon particles and to support the fine particles on the carbon particles.

9. An electrode for a fuel cell, made using the fine particle-supporting carbon particles defined in any one of claims 1 to 6, for an electrocatalyst.
